# EUROPÄISCHE PATENTSCHRIFT

(11) **EP 4 069 541 B1**
(45) Veröffentlichungstag und Bekanntmachung des Hinweises auf die Patenterteilung: **07.01.2026**
(21) Anmeldenummer: 20804201.0
(22) Anmeldetag: 09.11.2020
(51) Int. Cl.: B60K 17/02, B60K 17/12, B60K 17/354, B60K 17/356, B60K 17/35, F16D 11/10, B60K 1/00

(54) **ANTRIEBSVORRICHTUNG FÜR EINE FAHRZEUGACHSE EINES FAHRZEUGS**
DRIVE APPARATUS FOR A VEHICLE AXLE OF A VEHICLE
DISPOSITIF D'ENTRAÎNEMENT POUR ESSIEU D'UN VÉHICULE

(30) Priorität: 02.12.2019 DE 102019132591
(43) Veröffentlichungstag der Anmeldung: 12.10.2022
(73) Patentinhaber: Audi AG, 85045 Ingolstadt (DE)
(72) Erfinder: GEBHARD, Bastian, 92339 Beilngries (DE)
(74) Vertreter: Bierschneider, Walter
(86) Internationale Anmeldenummer: PCT/EP2020/081412
(87) Internationale Veröffentlichungsnummer: WO 2021/110359

(56) Entgegenhaltungen:
- DE-A1- 102015 010 121
- DE-A1- 102017 204 113
- US-A1- 2017 167 544

## Beschreibung

Die Erfindung betrifft eine Antriebsvorrichtung für eine Fahrzeugachse eines zweispurigen Fahrzeugs nach dem Oberbegriff des Anspruches 1 sowie ein Verfahren zum Betreiben einer solchen Antriebsvorrichtung nach dem Anspruch 10.

Bei einem gattungsgemäßen allradbetriebenen Fahrzeug mit Elektroantrieb können die Vorderachse und die Hinterachse voneinander unabhängig zumindest eine Elektromaschine aufweisen. Je nach Fahrbetrieb kann zum Beispiel die Elektromaschine der Vorderachse nicht bestromt sein und alleine die Elektromaschine der Hinterachse bestromt sein, so dass das Fahrzeug nur mit der Hinterachse angetrieben wird. Hierdurch wird der Gesamt-Wirkungsgrad erhöht und die Reichweite vergrößert. Allerdings treten bei einem solchen reinen Hinterachs-Betrieb Reibungsverluste durch den mitgeschleppten, deaktivierten Vorderachsantrieb auf.

Aus der DE 20 2015 000 397 U1 ist eine Betätigungsvorrichtung für eine Klauenkupplung bekannt. Aus der EP 2 409 873 B1 ist ein Verfahren zum Betrieb eines Antriebsstrangs eines Kraftfahrzeugs bekannt.

Aus der US 2017/167544 A1 ist ein Entkoppelsystem für eine Achse bekannt. Die DE 10 2015 010 121 A1 offenbart eine Antriebsvorrichtung für ein allradgetriebenes Kraftfahrzeug. Aus der DE 10 2017 204 113 A1 ist eine Kupplungsvorrichtung mit einer ersten, formschlüssig wirkenden Kupplung und mit einer zweiten, durch ein viskositätsveränderliches Wirkmedium wirkenden Kupplung bekannt.

Die Aufgabe der Erfindung besteht darin, eine Antriebsvorrichtung für eine Fahrzeugachse eines elektrisch betriebenen Fahrzeugs sowie ein Verfahren zum Betreiben einer solchen Antriebsvorrichtung bereitzustellen, bei dem im Fahrbetrieb Schleppverluste in einer deaktivierten Elektromaschine reduzierbar sind.

Die Aufgabe ist durch die Merkmale des Anspruches 1 oder 10 gelöst. Bevorzugte Weiterbildungen der Erfindung sind in den Unteransprüchen offenbart.

Erfindungsgemäß treibt eine Elektromaschine über ein Achsdifferenzial auf Abtriebswellen ab, die jeweils zu einem Fahrzeugrad führen. Eine der Abtriebswellen ist aufgeteilt in einen radseitigen Wellenabschnitt und in einen elektromaschinenseitigen Wellenabschnitt. Die beiden Wellenabschnitte sind mittels einer Formschlusskupplung trieblich miteinander koppelbar, um im Fahrbetrieb die Elektromaschine in Antriebsverbindung mit den Fahrzeugrädern zu bringen. Alternativ dazu sind die beiden Wellenabschnitte im Fahrbetrieb voneinander entkoppelbar, um im Fahrbetrieb bei deaktivierter Elektromaschine Schleppverluste zu vermeiden. Erfindungsgemäß ist die Formschlusskupplung als eine Schiebemuffe realisiert, die auf einer Steckverzahnung eines ersten der beiden Wellenabschnitte drehfest, jedoch axial verschiebbar angeordnet ist. Die Schiebemuffe kann mittels einer, von einem Aktor generierten Stellkraft zwischen einem geöffneten Kupplungszustand und einem geschlossenen Kupplungszustand verschiebbar sein. Im geöffneten Kupplungszustand ist die Schiebemuffe außer Formschlussverbindung mit dem zweiten Wellenabschnitt. Im geschlossenen Kupplungszustand ist dagegen die Schiebemuffe in Formschlussverbindung mit dem zweiten Wellenabschnitt. Der Aktor ist in elektrischer Signalverbindung mit einem Aktor-Steuergerät. Bei Vorliegen eines Kupplungseingriff-Bedarfs steuert der Koordinator den Aktor mit einem Schließ-Signal an, um die Formschlusskupplung zu schließen. Bei Nichtvorliegen eines Kupplungseingriff-Bedarfs steuert dagegen der Koordinator den Aktor mit einem Öffnung-Signal an, um die Formschlusskupplung zu öffnen.

Das Vorliegen/Nichtvorliegen eines Kupplungseingriff-Bedarfs wird in einem, dem Koordinator übergeordneten Haupt-Steuergerät, insbesondere ein Fahrdynamikregler, in Abhängigkeit aktueller Fahrbetriebsparameter ermittelt. Erfindungsgemäß ist das Haupt-Steuergerät nicht in direkter Signalverbindung mit dem Aktor, sondern unter Zwischenschaltung des Koordinators in Signalverbindung mit dem Aktor.

Der Koordinator kann als ein Micro-Controller realisiert sein und/oder hat eine lokale dezentrale Entscheidungshoheit im Falle einer Fehlfunktion beim An- oder Abkoppelvorgang, so dass eine im Vergleich zum Stand der Technik schnellere Fehlerbehebung ermöglicht ist.

Ein Kern der Erfindung besteht darin, dass der Koordinator in Signalverbindung mit der Elektromaschine ist. Vor Durchführung eines Ankoppelvorgangs oder eines Abkoppelvorgangs steuert der Koordinator die Elektromaschine derart an, dass beim An- oder Abkoppelvorgang eine im Wesentlichen lastfreie Kupplungsbetätigung der Formschlusskupplung gewährleistet ist.

In einer konkreten Ausführungsvariante kann mit Hilfe des Aktor-Steuergerätes vor dem Ankoppelvorgang eine Synchronisation durchgeführt werden. Bei der Synchronisation kann der Koordinator die Elektromaschine so ansteuern, dass zwischen dem radseitigen Wellenabschnitt und dem elektromaschinenseitigen Wellenabschnitt im Wesentlichen ein Gleichlauf vorherrscht. Sobald Gleichlauf vorliegt, generiert der Koordinator das Schließ-Signal, um den Ankoppelvorgang zu starten.

Zudem kann der Koordinator vor dem Start des Abkoppelvorgangs eine Nullmomentenregelung durchführen. Bei der Nullmomentenregelung steuert der Koordinator die Elektromaschine derart an, dass in der noch geschlossenen Formschlusskupplung eine weitgehende Drehmomententlastung, insbesondere eine Momentenfreiheit vorherrscht. Ohne eine solche Nullmomentenregelung würde bei deaktivierter Elektromaschine die noch geschlossene Formschlusskupplung mit dem Schleppmoment belastet sein. Bei einem übermäßig großen Schleppmoment würde (ohne Nullmomentenregelung) die Problematik bestehen, dass gegebenenfalls die vom Aktor ausgeübte Stellkraft nicht ausreicht, um die Formschlusskupplung zu lösen.

Im Hinblick auf einen prozesssicheren Ankoppelvorgang sowie Abkoppelvorgang ist es bevorzugt, wenn während der Synchronisation oder während der Nullmomentenregelung der Koordinator permanent die Raddrehzahl (das heißt die Abtriebsdrehzahl) und die Elektromaschinendrehzahl überwacht. Zur weiteren Steigerung der Prozesssicherheit während der Kupplungsbetätigung ist es bevorzugt, wenn dem Koordinator ein Positionssensor zugeordnet ist. Mittels des Positionssensors kann eine Istposition der Schiebemuffe erfasst werden. Nach erfolgtem Ankoppelvorgang oder Abkoppelvorgang kann in dem Aktor-Steuergerät eine Plausibilitätsprüfung durchgeführt werden, bei der die vom Positionssensor erfasste Schiebemuffen-Istposition auf Plausibilität geprüft wird. Bei der Plausibilitätsprüfung wird geprüft, ob die Schiebemuffen-Istposition mit einer im Koordinator hinterlegten Schiebemuffen-Abkoppelposition bzw. Schiebemuffen-Ankoppelposition übereinstimmt. Falls Übereinstimmung vorliegt, kann von einem einwandfreien Abkoppelvorgang bzw. Ankoppelvorgang ausgegangen werden.

Im Hinblick auf die hohe Packagedichte im Bereich der Fahrzeugachse ist eine bauraumreduzierte, kompakte Realisierung der Formschlusskupplung mitsamt Aktor von großer Bedeutung. Vor diesem Hintergrund kann dem Aktor eine Aktorhülse zugeordnet sein, die auf einem zylindrischen Schiebemuffen-Außenumfang angeordnet ist. Zur Drehentkopplung von der im Betrieb drehenden Schiebemuffe kann die Aktorhülse über zumindest ein Wälzlager auf dem Schiebemuffen-Außenumfang gelagert sein, und zwar so, dass die vom Aktor generierte axiale Stellkraft über die drehentkoppelte Aktorhülse und das Wälzlager in die Schiebemuffe eingeleitet wird.

In einer Ausführungsvariante kann für eine Stellkraft-Übertragung sowohl der Lageraußenring des Wälzlagers stellkraftübertragend an die Aktorhülse angebunden sein als auch der Lagerinnenring des Wälzlagers stellkraftübertragend an der Schiebemuffe angebunden sein.

Die obige Aktorhülse kann mittels des Aktors zwischen einer Offenposition, bei der die Formschlusskupplung geöffnet ist, und einer Schließposition verstellt werden. Hierzu kann der Aktor über eine Getriebestufe mit der Aktorhülse zusammenwirken. In einer bauraumgünstigen Realisierung kann diese Getriebestufe eine Außenverzahnung auf dem zylindrischen Schiebemuffen-Außenumfang aufweisen. In der Außenverzahnung sind die Zähne in der Axialrichtung voneinander beabstandet und in Zahneingriff mit einem Zahnrad einer Aktorwelle eines Elektromotors, der den Aktor bildet.

Bevorzugt ist eine Formschlusskupplung als Klauenkupplung ausgeführt, bei der die Schiebemuffe und der zweite Wellenabschnitt einander axial zugewandte, rad- und achsseitige Schaltklauen aufweist. Der zylindrische Schiebemuffen-Außenumfang kann unter Bildung eines Inneneckbereiches in die durchmessergrößeren Schaltklauen übergehen. In dem so gebildeten Inneneckbereich kann die Aktorhülse bauraumgünstig angeordnet sein.

Beim Ankoppelvorgang (das heißt Schließvorgang) der obigen Klauenkupplung können die rad- und achsseitigen Schaltklauen einander in der Axialrichtung Zahn auf Lücke gegenüberliegen, so dass eine leichtgängige Formschlusskupplung erfolgen kann. Im wahrscheinlicheren Fall kommen beim Schließvorgang dagegen zunächst die Schaltklauen Zahn auf Zahn in Anlage. Ab Erreichen der Anlage Zahn auf Zahn wird erfindungsgemäß die Aktorhülse weiter bis in ihre Schließposition verstellt, und zwar unter Aufbau einer axial auf die Schaltklauen wirkenden Federkraft einer Überlastfeder, mittels der die rad- und achsseitigen Schaltklauen gegeneinander verspannt sind. Sobald durch eine geringe relative Winkelverdrehung der beiden Kupplungshälften die Schaltklauen in eine Relativlage Zahn auf Lücke gebracht werden, können die rad- und achsseitigen Schaltklauen unter Abbau der Federkraft in Formschlussverbindung gelangen.

In einer technischen Realisierung können die radseitigen Schaltklauen an einem Trägerring ausgebildet sein, der über eine Steckverzahnung drehfest sowie axial verschiebbar auf dem radseitigen Wellenabschnitt angeordnet ist. Der Trägerring kann auf seiner dem achsseitigen Wellenabschnitt axial gegenüberliegenden Seite über die oben erwähnte Überlastfeder gegen einen Axialanschlag des radseitigen Wellenabschnitts abgestützt sein. Sofern daher beim Schließvorgang der Klauenkupplung die rad- und achsseitigen Schaltklauen in eine Anlage Zahn auf Zahn kommen, wird die Aktorhülse mitsamt Schiebemuffe in die Schließposition verstellt, so dass die Schiebemuffe den Trägerring unter Aufbau der Federkraft um einen Ausgleichshub auf dem radseitigen Wellenabschnitt verstellt. Sobald durch eine geringe relative Winkelverdrehung der beiden Kupplungshälften Zahn auf Lücke steht, erfolgt die Formschlussverbindung, bei der der radseitige Trägerring unter Aufbrauch des obigen Ausgleichshubes sowie unter Abbau der Federkraft in Formschlussverbindung mit den achsseitigen Schaltklauen gelangt.

Nachfolgend ist ein Ausführungsbeispiel der Erfindung anhand der beigefügten Figuren beschrieben.

Es zeigen:
- Figur 1: in grob schematischer Darstellung ein elektrisch betriebenes Kraftfahrzeug von oben mit hervorgehobenen, skizziert dargestellten Fahrzeugachsen;
- Figur 2: eine Antriebsvorrichtung für die Vorderachse des Fahrzeugs;
- Figur 3: in einer Teilansicht ein Ausführungsbeispiel einer Klauenkupplung, die im geöffneten Kupplungszustand dargestellt ist; und
- Figur 4 und 5: jeweils Diagramme, anhand derer ein Abkoppelvorgang (Figur 4) und ein Ankoppelvorgang (Figur 5) veranschaulicht sind.

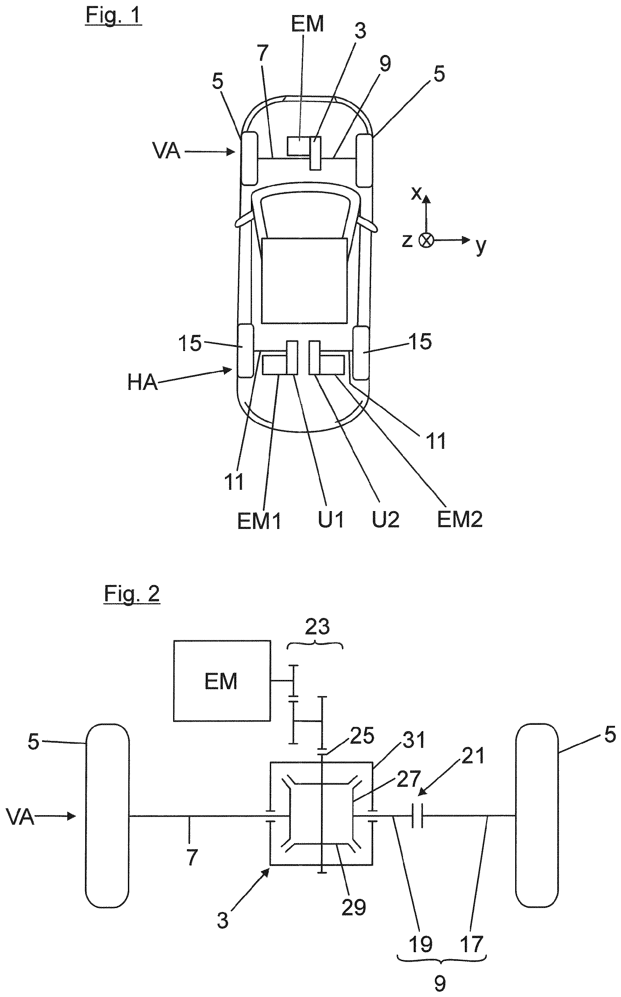

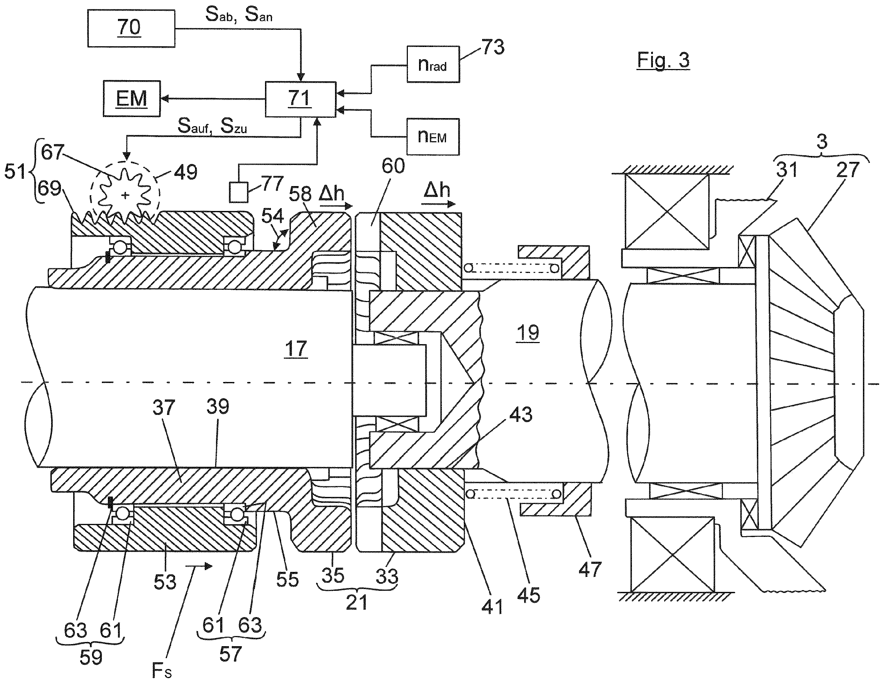

In der Figur 1 ist ein elektrisch betriebenes Kraftfahrzeug gezeigt, das eine elektrisch antreibbare Vorderachse VA und eine elektrisch antreibbare Hinterachse HA aufweist. Die Vorderachse VA ist mit genau einer Elektromaschine EM ausgestattet, die über ein Vorderachsdifferenzial 3 auf die zum rechten und linken Vorderrad 5 führenden linken und rechten Antriebswellen 7, 9 abtreibt. Die Hinterachse HA weist eine Antriebsvorrichtung auf, bei der im Unterschied zur Vorderachse VA jedem der Hinterräder 15 jeweils eine Elektromaschine EM1, EM2 zugeordnet ist, die über Übersetzungsstufen U1, U2 mit den Antriebswellen 11 der Hinterachse HA trieblich verbunden sind. Wie aus der Figur 2 und 3 weiter hervorgeht, ist die vordere rechte Antriebswelle 9 aufgeteilt in einen radseitigen Wellenabschnitt 17 und in einen achsseitigen Wellenabschnitt 19. Diese sind mittels einer Klauenkupplung 21 koppelbar, um im Fahrbetrieb die Elektromaschine EM in Antriebsverbindung mit den Fahrzeugrädern 5 zu bringen. Alternativ sind die Wellenabschnitte 17, 19 voneinander abkoppelbar, um im Fahrbetrieb sowie bei deaktivierter Elektromaschine EM Schleppverluste zu vermeiden.

Bei geöffneter Klauenkupplung 21 bleibt daher im Fahrbetrieb lediglich eine lastlose Ausgleichsbewegung der Ausgleichskegelräder 29 im Vorderachsdifferenzial 3. Der Rest der Antriebseinheit (das heißt Getriebe und Elektromaschine) kommt dagegen zum Stillstand, so dass Schleppverluste stark reduziert sind.

In der Figur 2 ist die Elektromaschine EM der Vorderachse VA über ein Vorgelege 23 mit einem eingangsseitigen Außenzahnrad 25 des Vorderachsdifferenzials 3 trieblich verbunden. An der Ausgangsseite des Vorderachsdifferenzials 3 sind Achskegelräder 27 an den beiden Antriebswellen 7, 9 angebunden. Die Achskegelräder 27 und damit verzahnte Ausgleichskegelräder 29 sind innerhalb eines Ausgleichsgehäuses 31 des Achsdifferenzials 3 positioniert.

Nachfolgend werden anhand der Figur 3 der Aufbau und die Funktionsweise der Klauenkupplung 21 beschrieben. In der Figur 3 ist das Achskegelrad 27 mit dem achsseitigen Wellenabschnitt 19 verlängert. Radial innerhalb des achsseitigen Wellenabschnitts 19 ist eine zum Vorderrad 5 geführte Steckwelle drehgelagert, die den radseitigen Wellenabschnitt 17 bildet. Die Klauenkupplung 21 weist in der Figur 3 achsseitige Schaltklauen 33 und radseitige Schaltklauen 35 auf, die bei geschlossener Klauenkupplung 21 miteinander in Formschlussverbindung sind. Die radseitigen Schaltklauen 35 sind in der Figur 3 Bestandteile einer Schiebemuffe 37, die auf einer Steckverzahnung 39 des radseitigen Wellenabschnitts 17 drehfest, jedoch axial verschiebbar angeordnet ist. Die achsseitigen Schaltklauen 33 sind auf einem Trägerring 41 ausgebildet, der über eine Steckverzahnung 43 auf dem achsseitigen Wellenabschnitt 19 drehfest, jedoch axial verschiebbar gelagert ist. Der Trägerring 41 ist auf seiner dem radseitigen Wellenabschnitt 17 axial gegenüberliegenden Seite mittels einer Überlastfeder 45 gegen einen Axialanschlag 47 achsseitigen Wellenabschnitt 19 abgestützt.

Die auf dem achsseitigen Wellenabschnitt 17 axial verschiebbar angeordnete Schiebemuffe 37 ist in der Figur 3 über einen Aktor 49 betätigbar, der als Elektromotor realisiert ist. Der Aktor 49 ist über eine bevorzugt selbsthemmende Getriebestufe 51 in trieblicher Verbindung mit einer Aktorhülse 53. Diese ist auf einem zylindrischen Schiebemuffen-Außenumfang 55 angeordnet. Zur Drehentkopplung von der im Betrieb drehenden Schiebemuffe 37 ist die Aktorhülse 53 über zwei Wälzlager (wahlweise auch Gleitlager) 57, 59 auf dem zylindrischen Schiebemuffen-Außenumfang 55 gelagert. In der Figur 3 ist ein Lageraußenring 61 der Wälzlager 57, 59 in den Innenumfang der Aktorhülse 53 eingepresst, das heißt stellkraftübertragend an der Aktorhülse 53 angebunden. Zudem ist ein Lagerinnenring 63 des Wälzlagers 57, 59 auf dem Schiebemuffen-Außenumfang 55 aufgepresst, das heißt stellkraftübertragend an der Schiebemuffe 37 angebunden. Auf diese Weise wird eine vom Aktor 49 generierte axiale Stellkraft Fs über die drehentkoppelte Aktorhülse 53 und weiter über die beiden Wälzlager 57, 59 in die Schiebemuffe 37 eingeleitet.

Die zwischen dem Aktor 49 und der Aktorhülse 53 geschaltete Getriebestufe 51 ist in der Figur 3 durch ein auf einer Aktorwelle ausgebildetes Antriebszahnrad 67 ausgebildet, das in Zahneingriff mit einer Außenverzahnung 69 auf der Außenumfangsseite der Schiebemuffe 37 ist. Die Außenverzahnung 69 weist voneinander in Axialrichtung beabstandete Zähne auf.

Nachfolgend wird anhand der Figur 3 ein Ankoppelvorgang (das heißt Schließvorgang) der Klauenkupplung 21 beschrieben, bei der die radseitigen und achsseitigen Schaltklauen 33, 35 einander Zahn 58 auf Lücke 60 (wie in der Figur 3 dargestellt) axial gegenüberliegen. In diesem Fall wird der Aktor 49 aktiviert, um die Aktorhülse 53 mitsamt der damit bewegungsgekoppelten Schiebemuffe 37 von der in der Figur 3 gezeigten Offenposition in eine Schließposition zu verschieben, in der die rad- und achsseitigen Schaltklauen 33, 35 leichtgängig in Eingriff gebracht sind.

Gegebenenfalls können - in Abkehr von der Figur 3 - im Schließvorgang die rad- und achsseitigen Schaltklauen 33, 35 nicht Zahn 58 auf Lücke 60 einander axial gegenüberliegen, sondern vielmehr Zahn 58 auf Zahn 58 einander gegenüberliegen. In diesem Fall kommen beim Schließvorgang die rad- und achsseitigen Schaltklauen 33, 35 zunächst Zahn 58 auf Zahn 58 in Anlage. Ab Erreichen der Anlage Zahn 58 auf Zahn 58 wird die Aktorhülse 53 mitsamt Schiebemuffe 37 um einen Überlasthub Δh (in der Figur 3 eingezeichnet) weiter bis in die Schließposition verstellt, wobei der Trägerring 41 unter Aufbau einer Federkraft der Überlastfeder 45 um den Überlasthub Δh auf den achsseitigen Wellenabschnitt 19 (in der Figur 3 nach rechts) verschoben wird. Sobald durch eine geringe relative Winkelverdrehung Zahn 58 auf Lücke 60 gegenübersteht, wird der Trägerring 41 unter Aufbrauch des Überlasthubes Δh sowie unter Abbau der Federkraft der Überlastfeder 45 schlagartig in Formschlussverbindung mit den achsseitigen Schaltklauen 33 der Schiebemuffe 37 gebracht.

Zum Ankoppeln (das heißt beim Schließen der Klauenkupplung 21) wird zunächst die Elektromaschine EM bestromt und somit der verschiebliche Teil (das heißt die radseitigen Schaltklauen 35) der Klauenkupplung 21 auf die aktuelle Raddrehzahl n_{rad} synchronisiert. Ist nahezu Synchronität erreicht, wird der Aktor 49 aktiviert, um die Klauenkupplung 21 zu schließen.

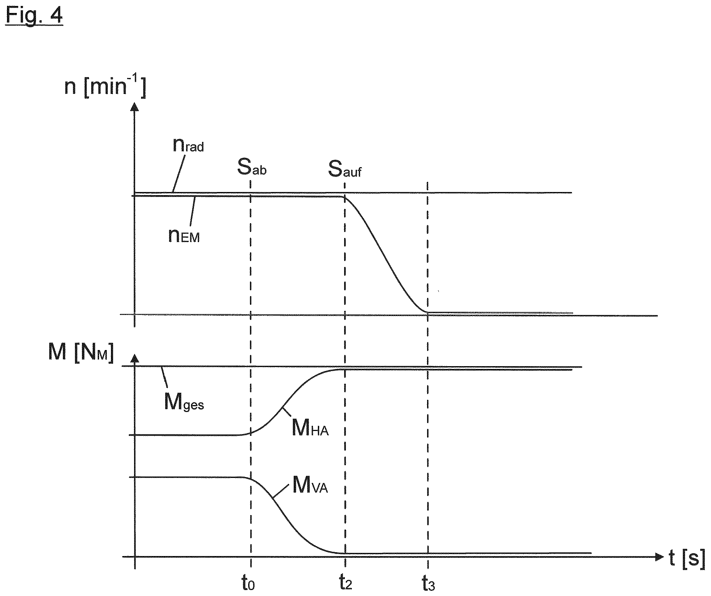

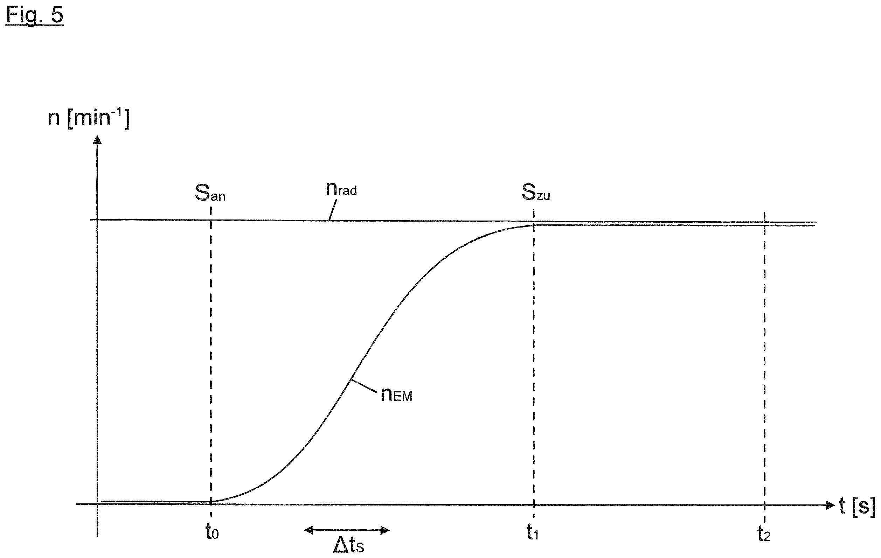

Nachfolgend wird anhand der Figur 4 ein Abkoppelvorgang und anhand der Figur 5 ein Ankoppelvorgang beschrieben. Im Hinblick auf ein einfacheres Verständnis der Diagramme in den Figuren 4 und 5 sind die dargestellten Verläufe der Raddrehzahl n_{rad} und der Elektromaschinen-Drehzahl n_{EM} übersetzungsbereinigt dargestellt:
In dem Diagramm der Figur 4 wird von einer Fahrsituation ausgegangen, bei der bis zu einem Zeitpunkt t₀ sämtliche Elektromaschinen EM, EM1, EM2 aktiviert sind und sowohl die Vorderachse VA als auch die Hinterachse HA im Antriebsstrang eingebunden sind. Die Vorderachse VA wird in der Figur 4 über die Elektromaschine EM mit einem Vorderachs-Moment M_{VA} angetrieben, während die Hinterachse HA (über die Elektromaschinen EM1, EM2) mit einem Hinterachs-Moment M_{HA} angetrieben wird. Die Summe aus dem Vorderachs- und Hinterachsmoment M_{VA} und M_{HA} entspricht einem vom Fahrer über das Fahrpedal angeforderten Gesamtmoment M_{ges}. Das M_{ges} wird von einem Haupt-Steuergerät 70 in Abhängigkeit von aktuellen Fahrbetriebsparametern in das Vorderachs-Moment M_{VA} und in das Hinterachs-Moment M_{HA} aufgeteilt.

In der Figur 4 wird in einem Haupt-Steuergerät 70, etwa einem Fahrdynamikregler, in Abhängigkeit aktueller Fahrbetriebsparameter ein Abkoppel-Signal S_{ab} (Zeitpunkt t₀) generiert. Mit Generierung des Abkoppel-Signals S_{ab} startet eine Momentenverlagerung, bei der das Vorderachs-Moment M_{VA} reduziert wird und gleichzeitig das Hinterachs-Moment M_{HA} um den gleichen Betrag erhöht wird, und zwar bei insgesamt unverändertem Gesamtmoment M_{ges}, um fahrerseitige Komforteinbußen zu vermeiden. Zudem startet der Koordinator 71 eine Nullmomentenregelung. Bei der Nullmomentenregelung wird die Vorderachs-Elektromaschine EM geringfügig in einen Vortrieb verbracht. Dadurch wird das in der noch geschlossenen Klauenkupplung 21 wirkende Schleppmoment ausgeglichen bzw. aufgehoben. Auf diese Weise wird die noch geschlossene Klauenkupplung 21 momentenfrei bzw. lastfrei. Sobald Momentenfreiheit erreicht ist, erzeugt der Koordinator 71 ein Kupplungs-Öffnungssignal S_{auf}, (in der Figur 4 zum Zeitpunkt t₂), so dass die Klauenkupplung 21 lastfrei geöffnet werden kann. Zum Zeitpunkt t₃ ist die Drehzahl n_{EM} der deaktivierten Elektromaschine EM bis auf null reduziert, während die Raddrehzahl n_{rad} über den Abkoppelvorgang hinweg konstant bleibt.

Anhand der Figur 5 wird nachfolgend ein Ankoppelvorgang beschrieben: Das in der Figur 5 gezeigte Diagramm geht von einer Fahrsituation aus, bei der bis zum Zeitpunkt t₀ nur Hinterachse HA mit aktivierten Hinterachs-Elektromaschinen EM1, EM2 in den Antriebsstrang eingebunden sind, während die Vorderachse VA mit deaktivierter Elektromaschine EM (das heißt n_{EM} = 0) von Antriebsstrang entkoppelt ist. Der radseitige Wellenabschnitt 17 dreht daher bei einer Raddrehzahl n_{rad}, während die Elektromaschinen-Drehzahl n_{EM} bis zum Zeitpunkt t₀ bei 0 liegt. Zum Zeitpunkt t₀ generiert das Haupt-Steuergerät 70 auf der Grundlage aktueller Fahrbetriebsparameter ein Ankoppel-Signal Sₐₙ, um die Vorderachse VA in den Antriebsstrang einzubinden. Daraufhin erfolgt eine Synchronisation Δt_{S}, bei der die noch abgekoppelte Elektromaschine EM bis auf eine Synchronisations-Drehzahl geregelt wird, um in etwa einen Gleichlauf zwischen den beiden Wellenabschnitten 17, 19 herzustellen. Sobald sich ein Gleichlauf einstellt, erzeugt der Koordinator 71 ein Schließ-Signal S_{zu} (Zeitpunkt t₁), so dass die Klauenkupplung 21 lastfrei geschlossen wird und die Elektromaschine EM ein Antriebsmoment auf den Antriebstrang geben kann. Zum Zeitpunkt t₂ erreicht die Aktorhülse 53 ihre dazu korrespondierende Schließposition.

Wie aus der Fig. 3 weiter hervorgeht, ist dem Aktor-Steuergerät 71 ein Positionssensor 77 zugeordnet. Mit Hilfe des Positionssensors 77 kann eine Schiebemuffen-Istposition erfasst werden. Im Rahmen einer Plausibilitätsprüfung kann im Koordinator 71 die Schiebemuffen-Istposition mit einer (in dem Koordinator 71 hinterlegten) Schiebemuffen-Abkoppelposition oder einer Schiebemuffen-Ankoppelposition verglichen werden.

Nach erfolgtem Ankoppelvorgang wird im Koordinator 71 eine Plausibilitätsprüfung durchgeführt, bei der die mittels des Positionssensors 77 erfasste Schiebemuffen-Istposition mit der in dem Koordinator 71 hinterlegten Schiebemuffen-Ankoppelposition verglichen wird. Sofern die Schiebemuffen-Istposition mit der im Koordinator 71 hinterlegten Schiebemuffen-Ankoppelposition übereinstimmt, liegt ein einwandfreier Ankoppelvorgang vor.

In gleicher Weise wird nach erfolgtem Abkoppelvorgang im Koordinator 71 eine Plausibilitätsprüfung durchgeführt, bei der die mittels des Positionssensors 77 erfasste Schiebemuffen-Istposition mit der in dem Koordinator 71 hinterlegten Schiebemuffen-Abkoppelposition verglichen wird. Sofern die Schiebemuffen-Istposition mit der im Koordinator 71 hinterlegten Schiebemuffen-Abkoppelposition übereinstimmt, liegt ein einwandfreier Abkoppelvorgang vor.

### BEZUGSZEICHENLISTE.

- 3: Vorderachsdifferenzial
- 5: Vorderräder
- 7, 9: Antriebswellen der Vorderachse
- 11: Antriebswellen der Hinterachse
- 15: Hinterräder
- 17: radseitiger Wellenabschnitt
- 19: achsseitiger Wellenabschnitt
- 21: Klauenkupplung
- 23: Vorgelege
- 25: Außenzahnrad
- 27: Achskegelräder
- 29: Ausgleichskegelräder
- 31: Ausgleichsgehäuse
- 33: achsseitige Schaltklauen
- 35: radseitige Schaltklauen
- 37: Schiebemuffe
- 39: Steckverzahnung
- 41: Trägerring
- 43: Steckverzahnung
- 45: Überlastfeder
- 47: Axialanschlag
- 49: Aktor
- 51: Getriebestufe
- 53: Aktorhülse
- 54: Inneneckbereich
- 55: zylindrischer Schiebemuffen-Außenumfang
- 57, 59: Wälzlager
- 61: Lageraußenring
- 63: Lagerinnenring
- 67: Antriebszahnrad
- 69: Außenverzahnung
- 71: Koordinator
- 73, 75: Drehzahlsensoren
- 77: Positionssensor
- EM, EM1, EM2: Elektromaschinen
- U1, U2: Übersetzungsstufen
- Δh: Überlasthub
- I: Offenposition
- II: Schließposition
- M_{VA},: Vorderachs-Antriebsmoment
- M_{HA}: Hinterachs-Antriebsmoment
- M_{ges}: Gesamt-Antriebsmoment
- Δt_{S}: Synchronisation
- n_{rad}: Raddrehzahl
- n_{EM}: Elektromaschinendrehzahl
- Sₐₙ: Ankoppel-Signal des Haupt-Steuergeräts 70
- S_{ab}: Abkoppel-Signal des Haupt-Steuergeräts 70
- S_{auf}: Öffnungs-Signal des Koordinators 71
- S_{zu}: Schließ-Signal des Koordinators 71

## Patentansprüche

1. Antriebsvorrichtung für eine Fahrzeugachse (VA) eines zweispurigen Fahrzeugs, mit einer Elektromaschine (EM), die über ein Achsdifferenzial (3) auf Abtriebswellen (7, 9) abtreibt, die jeweils zu einem Fahrzeugrad (5) führen, wobei eine der Abtriebswellen (9) aufgeteilt ist in einen radseitigen Wellenabschnitt (17) und einen elektromaschinenseitigen Wellenabschnitt (19), die mittels einer Formschlusskupplung (21) trieblich miteinander koppelbar sind, um im Fahrbetrieb die Elektromaschine (EM) in Antriebsverbindung mit den Fahrzeugrädern zu bringen oder voneinander entkoppelbar sind, um im Fahrbetrieb bei deaktivierter Elektromaschine (EM) Schleppverluste zu vermeiden, **dadurch gekennzeichnet, dass** die Formschlusskupplung (21) eine Schiebemuffe (37) aufweist, die auf einer Steckverzahnung (39) eines ersten Wellenabschnitts (17) drehfest, jedoch axial verschiebbar angeordnet ist, dass die Schiebemuffe (37) mittels einer, von einem Aktor (49) generierten Stellkraft (Fs) zwischen einem geöffneten Kupplungszustand, in dem die Schiebemuffe (39) außer Formschlussverbindung mit dem zweiten Wellenabschnitt (19) ist, und einem geschlossenem Kupplungszustand verschiebbar ist, in dem die Schiebemuffe (37) in Formschlussverbindung mit dem zweiten Wellenabschnitt (19) gebracht ist, und dass der Aktor (49) in elektrischer Signalverbindung mit einem Koordinator (71) ist, der bei Vorliegen eines Kupplungseingriff-Bedarfs (Sₐₙ) den Aktor (49) mit einem Schließ-Signal (S_{zu}) ansteuert, um die Formschlusskupplung (21) zu schließen, und bei Nichtvorliegen eines Kupplungseingriff-Bedarfs (S_{ab}) den Aktor (49) mit einem Öffnungs-Signal (S_{auf}) ansteuert, um die Formschlusskupplung (21) zu öffnen.

2. Antriebsvorrichtung nach Anspruch 1, **dadurch gekennzeichnet, dass** der Koordinator (71) in elektrischer Signalverbindung mit der Elektromaschine (EM) ist, und dass der Koordinator (71) vor Durchführung eines Ankoppelvorgangs oder eines Abkoppelvorgangs die Elektromaschine (EM) ansteuert, um beim An- oder Abkoppelvorgang eine lastfreie Kupplungsbetätigung zu ermöglichen.

3. Antriebsvorrichtung nach Anspruch 2, **dadurch gekennzeichnet, dass** der Koordinator (71) vor dem Ankoppelvorgang eine Synchronisation (Δtₛ) durchführt, bei der der Koordinator (71) die Elektromaschine (EM) so ansteuert, dass zwischen dem radseitigen Wellenabschnitt (17) und dem elektromaschinenseitigen Wellenabschnitt (19) ein Gleichlauf vorherrscht, und dass bei Vorliegen von Gleichlauf der Koordinator (71) den Ankoppelvorgang startet, das heißt den Aktor (49) mit dem Schließ-Signal (S_{zu}) ansteuert.

4. Antriebsvorrichtung nach Anspruch 2 oder 3, **dadurch gekennzeichnet, dass** der Koordinator (71) vor dem Abkoppelvorgang eine Nullmomentenregelung durchführt, bei der der Koordinator (71) die Elektromaschine (EM) so ansteuert, dass in der noch geschlossenen Formschlusskupplung (21) eine Drehmomententlastung, das heißt Momentenfreiheit, vorherrscht, und dass bei Vorliegen der Drehmomententlastung der Koordinator (71) den Abkoppelvorgang startet, das heißt den Aktor (49) mit dem Öffnungs-Signal (S_{auf}) ansteuert.

5. Antriebsvorrichtung nach Anspruch 3 oder 4, **dadurch gekennzeichnet, dass** während der Synchronisation (Δtₛ) oder während der Nullmomentenregelung der Koordinator (71) permanent die Raddrehzahl (n_{rad}) des radseitigen Wellenabschnitts (17) oder eine damit korrelierende Drehzahl überwacht.

6. Antriebsvorrichtung nach einem der Ansprüche 2 bis 5, **dadurch gekennzeichnet, dass** der Koordinator (71) mit einem Positionssensor (77) in elektrischer Verbindung ist, und dass nach erfolgtem Ankoppelvorgang oder Abkoppelvorgang eine Plausibilitätsprüfung durchführbar ist, bei der die vom Positionssensor (77) erfasste Schiebemuffen-Istposition auf Plausibilität geprüft wird.

7. Antriebsvorrichtung nach einem der vorhergehenden Ansprüche, **dadurch gekennzeichnet, dass** dem Aktor (49) eine Aktorhülse (53) zugeordnet ist, die auf einem zylindrischen Schiebemuffen-Außenumfang (55) angeordnet ist, und dass zur Drehentkopplung von der im Fahrbetrieb drehenden Schiebemuffe (37) die Aktorhülse (53) über zumindest ein Drehlager (57, 59) auf dem Schiebemuffen-Außenumfang (55) gelagert ist, so dass die vom Aktor (49) generierte axiale Stellkraft (Fs) über die drehentkoppelte Aktorhülse (53) und das Drehlager (57, 59) in die Schiebemuffe (37) eingeleitet wird, und dass für eine Stellkraft-Übertragung sowohl ein Lageraußenring (61) des Drehlagers (57, 59) stellkraftübertragend an der Aktorhülse (53) angebunden ist als auch ein Lagerinnenring (63) des Drehlagers (57, 59) stellkraftübertragend an der Schiebemuffe (37) angebunden ist.

8. Antriebsvorrichtung nach Anspruch 7, **dadurch gekennzeichnet, dass** die Aktorhülse (53) mittels des Aktors (49) zwischen einer Offenposition, bei der die Formschlusskupplung (21) offen ist, und einer Schließposition verstellbar ist, und/oder dass der Aktor (49) über eine Getriebestufe (51) mit der Aktorhülse (53) zusammenwirkt, und dass zur Realisierung der Getriebestufe (51) eine Außenverzahnung (69) auf der Außenumfangsseite der Schiebemuffe (37) ausgebildet ist, die in Axialrichtung voneinander beabstandete Zähne aufweist, die in Zahneingriff mit einem Zahnrad (67) einer Aktorwelle (65) eines Elektromotors des Aktors (49) ist.

9. Antriebsvorrichtung nach einem der vorhergehenden Ansprüche, **dadurch gekennzeichnet, dass** die Schiebemuffe (37) und der zweite Wellenabschnitt (19) einander axial zugewandte, rad- und achsseitige Schaltklauen (33, 35) aufweist, und dass der zylindrische Schiebemuffen-Außenumfang (55) unter Bildung eines Inneneckbereiches (54) in die durchmessergrößeren Schaltklauen (35) übergeht, und dass die Aktorhülse (53) bauraumgünstig in dem Inneneckbereich (54) angeordnet ist.

10. Verfahren zum Betreiben einer Antriebsvorrichtung nach einem der vorhergehenden Ansprüche.

## Claims

1. Drive device for a vehicle axle (VA) of a two-track vehicle, having an electric machine (EM) which outputs drive via an axle differential (3) to output shafts (7, 9) leading in each case to a vehicle wheel (5), wherein one of the output shafts (9) is divided into a wheel-side shaft portion (17) and an electric-machine-side shaft portion (19), which, by means of a form-fit clutch (21), are couplable in terms of drive to one another, in order to bring the electric machine (EM) into drive connection with the vehicle wheels during driving operation, or decouplable in terms of drive from one another, in order to avoid drag losses during driving operation with the electric machine (EM) deactivated, **characterized in that** the form-fit clutch (21) has a sliding sleeve (37) which is arranged rotationally conjointly but axially displaceably on a spline toothing (39) of a first shaft portion (17), **in that**, by means of an actuating force (F_{S}) generated by an actuator (49), the sliding sleeve (37) is displaceable between an open coupling state, in which the sliding sleeve (39) is not in form-fitting connection with the second shaft portion (19), and a closed coupling state, in which the sliding sleeve (37) has been brought into form-fitting connection with the second shaft portion (19), and **in that** the actuator (49) is in electrical signal connection to a coordinator (71) which, when there is a clutch-engagement requirement (Sₐₙ), controls the actuator (49) by way of a closing signal (S_{zu}) in order to close the form-fit clutch (21) and, when there is not a clutch-engagement requirement (S_{ab}), controls the actuator (49) by way of an opening signal (S_{auf}) in order to open the form-fit clutch (21).

2. Drive device according to Claim 1, **characterized in that** the coordinator (71) is in electrical signal connection to the electric machine (EM), and **in that**, prior to a coupling operation or decoupling operation being carried out, the coordinator (71) controls the electric machine (EM) so as to allow load-free clutch actuation during the coupling or decoupling operation.

3. Drive device according to Claim 2, **characterized in that**, prior to the coupling operation, the coordinator (71) carries out a synchronization (Δtₛ) during which the coordinator (71) controls the electric machine (EM) in such a way that synchronism prevails between the wheel-side shaft portion (17) and the electric-machine-side shaft portion (19), and **in that**, when synchronism has been realized, the coordinator (71) starts the coupling operation, that is to say controls the actuator (49) by way of the closing signal (S_{zu}).

4. Drive device according to Claim 2 or 3, **characterized in that**, prior to the decoupling operation, the coordinator (71) carries out zero-torque regulation, in which the coordinator (71) controls the electric machine (EM) in such a way that torque relief, that is to say freedom from torque, prevails in the still closed form-fit clutch (21), and **in that**, when the torque relief has been realized, the coordinator (71) starts the decoupling operation, that is to say controls the actuator (49) by way of the opening signal (S_{auf}).

5. Drive device according to Claim 3 or 4, **characterized in that**, during the synchronization (Δtₛ) or during the zero-torque regulation, the coordinator (71) permanently monitors the wheel rotational speed (n_{rad}) of the wheel-side shaft portion (17) or a rotational speed correlating therewith.

6. Drive device according to one of Claims 2 to 5, **characterized in that** the coordinator (71) is in electrical connection to a position sensor (77), and **in that**, after completion of a coupling operation or decoupling operation, a plausibility check, in which the sliding-sleeve actual position detected by the position sensor (77) is checked for plausibility, is able to be carried out.

7. Drive device according to one of the preceding claims, **characterized in that** the actuator (49) is assigned an actuator sleeve (53) which is arranged on a cylindrical sliding-sleeve outer circumference (55), and **in that**, for rotational decoupling from the sliding sleeve (37), which rotates during driving operation, the actuator sleeve (53) is mounted on the sliding-sleeve outer circumference (55) via at least one rotary bearing (57, 59) so that the axial actuating force (F_{S}) generated by the actuator (49) is introduced into the sliding sleeve (37) via the rotationally decoupled actuator sleeve (53) and the rotary bearing (57, 59), and **in that**, for actuating-force transmission, both a bearing outer ring (61) of the rotary bearing (57, 59) is connected in an actuating-force-transmitting manner to the actuator sleeve (53) and a bearing inner ring (63) of the rotary bearing (57, 59) is connected in an actuating-force-transmitting manner to to the sliding sleeve (37).

8. Drive device according to Claim 7, **characterized in that**, by means of the actuator (49), the actuator sleeve (53) is adjustable between an open position, in which the form-fit clutch (21) is open, and a closing position, and/or **in that** the actuator (49) interacts with the actuator sleeve (53) via a transmission stage (51), and **in that**, for the realization of the transmission stage (51), an outer toothing (69) is formed on the outer circumferential side of the sliding sleeve (37), said outer toothing having teeth which are spaced apart from one another in an axial direction and being in toothed engagement with a gear (67) of an actuator shaft (65) of an electric motor of the actuator (49).

9. Drive device according to one of the preceding claims, **characterized in that** the sliding sleeve (37) and the second shaft portion (19) have wheel-side and axle-side shift claws (33, 35) that face one another axially, and **in that** the cylindrical sliding-sleeve outer circumference (55) transitions into the shift claws (35), which have a larger diameter, such that an inner corner region (54) is formed, and **in that** the actuator sleeve (53) is arranged in an expedient manner in terms of structural space in the inner corner region (54).

10. Method for operating a drive device according to one of the preceding claims.

## Revendications

1. Dispositif d'entraînement pour un essieu (VA) d'un véhicule à deux voies, comprenant une machine électrique (EM) qui, par l'intermédiaire d'un différentiel d'essieu (3), entraîne des arbres de sortie (7, 9) menant chacun à une roue (5) du véhicule, l'un des arbres de sortie (9) étant divisé en une partie d'arbre (17) côté roue et une partie d'arbre (19) côté machine électrique, qui sont accouplables entre elles en entraînement au moyen d'une liaison par complémentarité de forme (21) afin d'amener la machine électrique (EM) en liaison d'entraînement avec les roues du véhicule en mode de conduite, ou qui sont découplables l'une de l'autre afin d'éviter, en mode de conduite, lorsque la machine électrique (EM) est désactivée, des pertes par traînée, **caractérisé en ce que** la liaison par complémentarité de forme (21) comprend un manchon coulissant (37) qui est agencé de manière solidaire en rotation, mais déplaçable axialement, sur une denture d'emboîtement (39) d'une première partie d'arbre (17), **en ce que** le manchon coulissant (37) est apte à être déplacé au moyen d'une force d'actionnement (F_{S}) générée par un actionneur (49) entre un état de liaison ouvert, dans lequel le manchon coulissant (39) est amené hors de liaison par complémentarité de forme avec la deuxième partie d'arbre (19), et un état de liaison fermé, dans lequel le manchon coulissant (37) est amené en liaison par complémentarité de forme avec la deuxième partie d'arbre (19), et **en ce que** l'actionneur (49) est en liaison de signal électrique avec un coordinateur (71) qui, en cas de présence d'un besoin de mise en prise d'accouplement (Sₐₙ), actionne l'actionneur (49) avec un signal de fermeture (S_{zu}) pour fermer la liaison par complémentarité de forme (21), et en cas d'absence d'un besoin de mise en prise d'accouplement (S_{ab}), actionne l'actionneur (49) avec un signal d'ouverture (S_{auf}) pour ouvrir la liaison par complémentarité de forme (21).

2. Dispositif d'entraînement selon la revendication 1, **caractérisé en ce que** le coordinateur (71) est en liaison de signal électrique avec la machine électrique (EM), et **en ce que** le coordinateur (71) actionne la machine électrique (EM) avant l'exécution d'un processus d'accouplement ou d'un processus de découplage, afin de permettre un actionnement de liaison sans charge lors du processus d'accouplement ou de découplage.

3. Dispositif d'entraînement selon la revendication 2, **caractérisé en ce que** le coordinateur (71) effectue une synchronisation (Δtₛ) avant le processus d'accouplement, au cours de laquelle le coordinateur (71) actionne la machine électrique (EM) de telle sorte qu'un synchronisme existe entre la partie d'arbre (17) côté roue et la partie d'arbre (19) côté machine électrique, et **en ce qu'**en cas de présence de synchronisme, le coordinateur (71) lance le processus d'accouplement, c'est-à-dire qu'il actionne l'actionneur (49) avec le signal de fermeture (S_{zu}).

4. Dispositif d'entraînement selon la revendication 2 ou 3, **caractérisé en ce que** le coordinateur (71) effectue une régulation à couple nul avant le processus de découplage, au cours de laquelle le coordinateur (71) actionne la machine électrique (EM) de telle sorte qu'un relâchement du couple, c'est-à-dire une liberté de moment, existe dans la liaison par complémentarité de forme (21) encore fermée, et **en ce qu'**en cas de présence du relâchement du couple, le coordinateur (71) lance le processus de découplage, c'est-à-dire qu'il actionne l'actionneur (49) avec le signal d'ouverture (Sₐᵤf).

5. Dispositif d'entraînement selon la revendication 3 ou 4, **caractérisé en ce que**, pendant la synchronisation (Δtₛ) ou pendant la régulation à couple nul, le coordinateur (71) surveille en permanence la vitesse de rotation de roue (n_{rad}) de la partie d'arbre (17) côté roue ou une vitesse de rotation corrélée à celle-ci.

6. Dispositif d'entraînement selon l'une des revendications 2 à 5, **caractérisé en ce que** le coordinateur (71) est en liaison électrique avec un capteur de position (77), et **en ce qu'**après l'exécution du processus d'accouplement ou du processus de découplage, un contrôle de plausibilité peut être effectué, lors duquel la position réelle du manchon coulissant détectée par le capteur de position (77) est vérifiée quant à sa plausibilité.

7. Dispositif d'entraînement selon l'une des revendications précédentes, **caractérisé en ce qu'**un manchon (53) d'actionneur est associé à l'actionneur (49), lequel est agencé sur une périphérie extérieure cylindrique (55) du manchon coulissant, et **en ce que**, pour le découplage en rotation du manchon coulissant (37) tournant en mode de déplacement, le manchon (53) d'actionneur est monté sur la périphérie extérieure (55) du manchon coulissant par l'intermédiaire d'au moins un palier de rotation (57, 59), de sorte que la force d'actionnement axiale (FS) générée par l'actionneur (49) est transmise au manchon coulissant (37) par l'intermédiaire du manchon (53) d'actionneur découplé en rotation et du palier de rotation (57, 59), et **en ce que**, pour une transmission de la force d'actionnement, une bague extérieure (61) du palier de rotation (57, 59) est accouplée au manchon (53) d'actionneur de manière à transmettre la force d'actionnement et une bague intérieure (63) du palier de rotation (57, 59) est en même temps accouplée au manchon coulissant (37) de manière à transmettre la force d'actionnement.

8. Dispositif d'entraînement selon la revendication 7, caractérisé que le manchon (53) d'actionneur est apte à être déplacé au moyen de l'actionneur (49) entre une position d'ouverture, dans laquelle la liaison par complémentarité de forme (21) est ouverte, et une position de fermeture, et/ou en ce que l'actionneur (49) coopère avec le manchon (53) d'actionneur par l'intermédiaire d'un étage de transmission (51), et en ce que, pour la réalisation de l'étage de transmission (51), une denture extérieure (69) est formée sur le côté périphérique extérieur du manchon coulissant (37), laquelle présente des dents espacées les unes des autres dans le sens axial, qui sont en prise avec une roue dentée (67) d'un arbre (65) d'actionneur d'un moteur électrique de l'actionneur (49).

9. Dispositif d'entraînement selon l'une des revendications précédentes, **caractérisé en ce que** le manchon coulissant (37) et la deuxième partie d'arbre (19) présentent des griffes de commutation (33, 35) tournées axialement l'une vers l'autre, côté roue et côté essieu, et **en ce que** la périphérie extérieure cylindrique du manchon coulissant (55) se prolonge dans les griffes de commutation (35) de plus grand diamètre en formant une zone d'angle intérieur (54), et **en ce que** le manchon (53) d'actionneur est agencé de manière peu encombrante dans la zone (54) d'angle intérieur.

10. Procédé permettant de faire fonctionner un dispositif d'entraînement selon l'une des revendications précédentes.
